# EUROPÄISCHE PATENTSCHRIFT

(11) **EP 3 608 631 B1**
(45) Veröffentlichungstag und Bekanntmachung des Hinweises auf die Patenterteilung: **18.11.2020**
(21) Anmeldenummer: 18902893.9
(22) Anmeldetag: 13.09.2018
(51) Int. Cl.: G01C 17/04

(54) **KOMPASS**
COMPASS
BOUSSOLE

(30) Priorität: 29.01.2018 RU 2018103152
(43) Veröffentlichungstag der Anmeldung: 12.02.2020
(73) Patentinhaber: Chropov, Sergey Mikhaylovich, Moscow, 109147 (RU)
(72) Erfinder: CHROPOV, Andrey Sergeevich, Moscow, 117447 (RU); FILIMONOV, Mikhail Trofimovich, Fryazino, Moskovskaya obl., 141195 (RU); CHROPOV, Sergey Mikhaylovich, Moscow, 109147 (RU)
(74) Vertreter: Jeck, Anton
(86) Internationale Anmeldenummer: PCT/RU2018/000600
(87) Internationale Veröffentlichungsnummer: WO 2019/147163

(56) Entgegenhaltungen:
- DE-C- 659 518
- DE-U- 7 520 888
- DE-U1- 29 911 430
- RU-C1- 2 073 204
- SE-C2- 508 194
- SU-A1- 1 776 993
- SU-A3- 1 816 314
- SU-A3- 1 822 493
- US-A- 4 462 164
- US-A- 4 462 164
- US-A1- 2016 076 887

## Beschreibung

Die Erfindung betrifft einen Kompass zur Orientierung im Gelände. Die Erfindung kann im Orientierungslaufsport eingesetzt werden.

Der Orientierungslaufsport ist eine Sportart, bei der die Sportler (Läufer) mehrere Kontrollpunkte (KP) mit Hilfe von Orientierungslaufkarte und Kompass ablaufen müssen. Die Kontrollpunkte sind im Gelände festgelegt. Die Ergebnisse werden in der Regel nach der benötigten Durchgangszeit ermittelt.

Vor dem Sportler im Gelände steht die Aufgabe, einen Teil der Distanz vom KP A bis zum KP B geradeaus zu laufen (Bewegung im Azimut). Dazu bekommt er eine Orientierungslaufkarte. Auf der Karte sind die KP A und B eingetragen (aufgedruckt). Die KP A und B sind untereinander durch eine Linie (Strecke AB) verbunden. Außerdem sind auf der Karte gerichtete Linien der magnetischen Nordrichtung (Magnetisch-Nord) eingezeichnet. Der Winkel zwischen der Linie der magnetischen Nordrichtung und der AB-Strecke auf der Karte wird als ein Karten-Azimut der AB-Strecke bezeichnet. Um die gestellte Aufgabe zu lösen, muss der Sportler den Azimutwinkel von der Karte auf die Umgebung übertragen. Danach muss er die Bewegung in Azimut (nach dem Richtungswinkel) beginnen. Dazu wird der Kompass benutzt.

Um die Ermittlung zu beschleunigen, wird der Kompass benutzt. Die Kompassnadel befindet sich innerhalb einer hermetisch dichten flachen Kapsel. Die Kapsel ist mit einer Flüssigkeit gefüllt. An der Kapsel ist eine Nord-Süd-Richtung angegeben. Außerdem kann daran eine Winkelskala mit einer Gradeinteilung angebracht sein.

Die Kapsel wird an der Platte drehbar befestigt. Die Platte weist eine Linie der Bewegungsrichtung auf (A.W. Iwanow, A.A. Schirinja: Moderne Vorbereitung von Orientierungsläufern, M., Sowetskij sport, 2010, S. 6). Der Läufer positioniert die Platte auf der Karte. Die Linie der Bewegungsrichtung fällt dabei mit der erforderlichen Bewegungsrichtung auf der Karte zusammen, oder sie ist parallel dazu. Danach dreht sich der Läufer so lange, bis die Kompassnadel mit der Nord-Süd-Richtung auf der Karte zusammenfällt. Jetzt zeigt die Linie der Bewegungsrichtung, wohin man im Gelände laufen muss. Ein Fehler bei der Ermittlung der Bewegungsrichtung führt zu Zeitverlusten bei der Suche nach dem Posten.

Unter den Orientierungsläufern hat sich besonders ein Kompass etabliert, bei dem die Platte am Daumen gehalten wird. Ein solcher Kompass weist eine Schlaufe auf. Die Schlaufe ist an der Platte fixiert. Mit dieser Schlaufe wird der Kompass am Daumen angelegt. Die Linie der Bewegungsrichtung fällt mit der gerade verlaufenden Plattenkante zusammen. Die Verlängerung der geradlinigen Plattenkante verläuft durch die Achse der Kapsel (ebenda, S. 8). Die Kante mit einer farbigen Linie am Kantenrand wird Kantenlinie genannt. Derartige Kompasse sind z.B. aus den Dokumenten US4462164 A und SE508194 C2 bekannt.

Dieser Kompass wird als nächstliegend gegenüber dem vorgeschlagenen Gerät angesehen. Er wurde zum Prototyp gewählt. Der Mangel des bekannten Kompasses besteht darin, dass bei der Übertragung der Bewegungsrichtung vom Kompass auf die Gegend eine Abweichung auftreten kann.

Nach Ansicht von Orientierungslaufspezialisten ist ein "Daumenkompass" für eine fehlerfreie Bewegung in Azimutrichtung nicht geeignet (ebenda, S. 9).

Beim Laufen in Azimut muss die Kantenlinie der Kompassplatte zu der Linie der Bewegungsrichtung des Läufers parallel sein. Wenn die Parallelität nicht eingehalten wird und sich ein Winkel zwischen diesen beiden Linien bildet, ist dieser Winkel ein Zeichen dafür, dass der Azimut fehlerhaft ermittelt wurde. Gemäß der Anatomie des Menschen ist die Linie der Bewegungsrichtung des Läufers zu seinem Körper lotrecht. Für ein präzises Laufen in Azimut muss daher die Kantenlinie der Kompassplatte zum Körper des Läufers lotrecht sein.

Diese Bedingung kann vom Läufer durch die Ausführung von verschiedenen Handlungen erfüllt werden. Dazu gehören beispielsweise die folgenden:
Der Läufer zieht eine imaginäre Linie von der Kantenlinie bis zu seinem Körper. In der Nähe seines Körpers zieht er in Gedanken eine Linie, die zu der imaginären verlängerten Kantenlinie lotrecht ist. Danach überprüft der Läufer in Gedanken die Parallelität der gezogenen lotrechten Linie und der Linie, auf der die Schultern des Läufers liegen. Gegebenenfalls dreht der Läufer die Kompassplatte noch etwas, bis die beiden Linien parallel zueinander sind.

Diese Handlungen mit den imaginären Linien, insbesondere mit den lotrechten, sind nicht präzise. Sie führen Abweichungen herbei. Diese können sich ansammeln. Dadurch wird die Ermittlung des Azimuts beeinträchtigt. Somit stellt die dargestellte Vorgehensweise eine potenzielle Fehlerquelle dar. Diese Vorgehensweise ist zeitaufwendig. Darüber hinaus bedarf sie eines hohen Konzentrationsvermögens.

Die Aufgabe der vorliegenden Erfindung besteht darin, die Abweichung bei der Übertragung der Bewegungsrichtung vom Kompass auf die Gegend zu reduzieren.

Diese Aufgabe wird dadurch gelöst, dass der Orientierungslauf-Kompass eine Kapsel mit einer Magnetnadel und eine Platte umfasst. An der Platte ist eine Schlaufe (ein Riemen) befestigt. Mit dieser Schlaufe wird der Kompass am Finger gehalten. Die Platte weist eine Kantenlinie der Bewegungsrichtung auf. Die Verlängerung der Kantenlinie verläuft durch die Mitte der Kapsel. Die Kompassplatte weist eine zweite Kantenlinie auf. Die zweite Kantenlinie ist zur Kantenlinie der Bewegungsrichtung lotrecht. Die zweite Kantenlinie ist hinter der Kapsel angeordnet.
Die zweite Kantenlinie erspart dem Läufer die komplizierte Prozedur, die Kantenlinie der Platte lotrecht zum Körper des Läufers anzuordnen. Diese Vorgehensweise ist zeitaufwendig, verlangt Aufmerksamkeit und führt potenzielle Fehler bei der Erstellung von imaginären Linien herbei. Diese Prozedur wird durch die Aufgabe ersetzt, die Parallelität von zwei nicht imaginären sondern realen Linien einzuhalten. Diese Aufgabe kann wesentlich leichter, schneller und mit minimalen Abweichungen erledigt werden. Infolgedessen erhöht sich die Genauigkeit der Ermittlung des Azimuts. Zeitlicher sowie geistiger Aufwand des Läufers werden dabei reduziert.

Ein anderer positiver Effekt von der Hinzufügung einer zweiten Kantenlinie besteht darin, dass die Parallelität dieser Kantenlinie zur Linie des Körpers des Läufers mit peripherem Sehen kontrolliert werden kann. Es ist unmöglich, dies für die Kantenlinie der Bewegungsrichtung durchzuführen. Demgemäß kann die Azimutgenauigkeit eingehalten werden, ohne dass der Blick auf der Kantenlinie fokussiert werden muss. Dabei hat der Läufer die Möglichkeit, andere Aufgaben der Orientierung zu lösen.

Der zu erreichende Effekt der vorgeschlagenen Erfindung wird dadurch verstärkt, dass der Kompass zusätzliche Kantenlinien aufweist. Diese zusätzlichen Kantenlinien sind zur Kantenlinie der Bewegungsrichtung parallel.

Die Erfindung wird nun anhand der Zeichnung näher erläutert. Es zeigen:

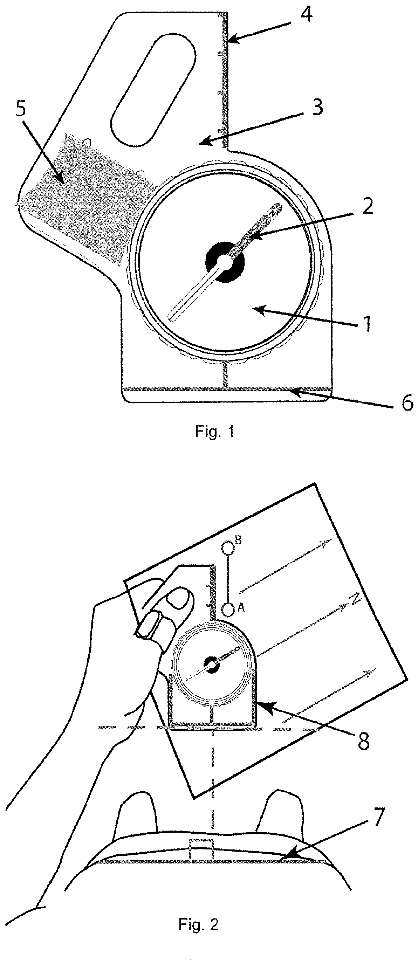

- Fig. 1: eine Draufsicht auf den Kompass, wobei
1 Kapsel,
2 Kompassnadel,
3 Platte,
4 Kantenlinie der Bewegungsrichtung,
5 Schlaufe,
6 Kantenlinie die zur Bewegungsrichtung lotrecht ist,
7 Linie, auf der die Schultern des Läufers liegen, sind und
- Fig. 2: eine Anordnung der zusätzlichen Kantenlinien 8.

Der Kompass gemäß der Erfindung wird folgendermaßen benutzt:

Die Schlaufe 5 wird um den Daumen gelegt, im vorliegenden Fall um den linken Daumen. Durch die Öffnung wird die Karte mit dem Daumen an die Platte 3 angedrückt. Die Karte wird gedreht. Die Kantenlinie 4 der Bewegungsrichtung muss dabei mit der erforderlichen Richtung auf der Karte zusammenfallen. Mit seiner rechten Hand dreht der Läufer die Kapsel 1 so lange, bis sich die Nord-Süd-Richtung an der Kapsel 1 und die Nord-Süd-Richtung auf der Karte überdecken. Dann korrigiert der Läufer die Anordnung des Kompasses in Bezug auf seinen Körper nach der Kantenlinie 6.

Die Aufgabe des Läufers dabei ist, die Parallelität der Kantenlinie zur Linie (7) zu erreichen, auf der die Schultern des Läufers liegen. Danach dreht sich der Läufer. Die Kompassnadel 2 und die Nord-Süd-Richtung an der Kapsel 1 müssen zusammentreffen. Mit seinem Blick verlängert der Läufer gedanklich die Kantenlinie 4 und legt die Linie der Bewegungsrichtung im Gelände fest. Der Läufer läuft und kontrolliert die Anordnung des Kompasses nach der Kantenlinie 6.

Außerdem kontrolliert er, dass die Kompassnadel 2 und die Nord-Süd-Richtung an der Kapsel 1 zusammenfallen. Danach berichtigt er die aktuelle (tatsächliche) Laufrichtung nach der Kantenlinie 4.

Somit kann die Abweichung dank der Kantenlinie 6 verringert werden. Die Abweichung wird durch die Verschiebung des Kompasses bezüglich des Körpers des Läufers beim Laufen verursacht. Die zusätzlichen Kantenlinien 8 vereinfachen die richtige Anordnung des Kompasses.

Ein anderer positiver Effekt der Hinzufügung einer lotrechten Kantenlinie besteht darin, dass die Kantenlinie der Bewegungsrichtung verkleinert (verkürzt) werden kann, ohne die Azimutgenauigkeit bei der Ermittlung und der Einhaltung zu beeinträchtigen. Dies ist möglich, weil diese Kantenlinie in die Prozedur der richtigen Anordnung der Platte in Bezug auf den Körper des Läufers nicht mit einbezogen ist. Demzufolge vergrößert sich der freie Platz zum Kartenlesen neben dem Daumen. Die Platte sperrt nicht mehr den Abschnitt der Karte, der sich auf die Position des Läufers bezieht. Dadurch wird die Lesbarkeit der Karte im betreffenden Bereich der Orientierung verbessert. Auch das Fehlerrisiko wird vermindert.

## Patentansprüche

1. Ein Orientierungslauf-Kompass umfasst eine Kapsel (1) mit einem magnetischen Zeiger (2) und eine Platte (3). An der Platte ist eine Schlaufe (5) befestigt. Mit dieser Schlaufe (5) wird der Kompass am Finger gehalten und getragen. Die Platte weist eine Kantenlinie der Bewegungsrichtung (4) auf. Die Verlängerung der Kantenlinie verläuft durch die Mitte der Kapsel. Der Kompass ist **dadurch gekennzeichnet, dass** die Kompassplatte eine zweite Kantenlinie (6) aufweist. Die zweite Kantenlinie (6) ist zur Kantenlinie der Bewegungsrichtung (4) lotrecht. Die zweite Kantenlinie ist hinter der Kapsel angeordnet.

2. Kompass nach Anspruch 1, **dadurch gekennzeichnet, dass** er zusätzliche Kantenlinien (8) aufweist, die zu den Kantenlinien der Bewegungsrichtung (4) parallel angeordnet sind.

## Claims

1. An orienteering compass comprising a capsule with a magnetic pointer and a plate. A loop (5) is attached to the plate. With this loop (5) the compass is held and carried on the finger. The plate has an edge line in the direction of movement (4). The extension of the edge line runs through the middle of the capsule. The compass is **characterized in that** the compass plate has a second edge line (6). The second edge line (6) is perpendicular to the edge line of the direction of movement. The second edge line is located behind the capsule.

2. Compass according to claim 1, **characterized in that** it has additional edge lines (8) which are arranged parallel to the edge lines of the direction of movement (4).

## Revendications

1. Une boussole d'orientation comportant une capsule (1) munie d'un pointeur magnétique (2), d'une aiguille magnétique et d'une plaque (3). Au niveau de la plaque, une boucle (5) (une courroie) est fixée. Grâce à cette boucle, la boussole est tenue à la main et portée. La plaque présente une ligne de balayage de la direction de déplacement (4). Le prolongement de la ligne de balayage se déroule au milieu de la capsule. La boussole est **caractérisée** à ce que la plaque de la boussole présente une deuxième ligne de balayage (6). La deuxième ligne de balayage (6) est perpendiculaire de la ligne de balayage de la direction de déplacement (4). La deuxième ligne de balayage est disposée derrière la capsule.

2. Une boussole selon la revendication 1 est **caractérisée** de sorte qu'elle présente des lignes de balayage supplémentaires (8) qui sont disposées à titre parallèle aux lignes de balayage de la direction de déplacement (4).
